# EUROPÄISCHE PATENTSCHRIFT

(11) **EP 1 054 761 B1**
(45) Veröffentlichungstag und Bekanntmachung des Hinweises auf die Patenterteilung: **25.02.2004**
(21) Anmeldenummer: 99973269.6
(22) Anmeldetag: 07.12.1999
(51) Int. Cl.: B29C 45/16, A46B 5/02

(54) **KUNSTSTOFFGEGENSTAND FÜR DIE VERWENDUNG IM BEREICH DER KÖRPERPFLEGE**
PLASTIC OBJECT FOR USE IN PERSONAL HYGIENE
ARTICLE EN PLASTIQUE POUR HYGIENE CORPORELLE

(30) Priorität: 10.12.1998 CH 244898
(43) Veröffentlichungstag der Anmeldung: 29.11.2000
(60) Teilanmeldung: 03028055.6
(73) Patentinhaber: Trisa Holding AG, 6234 Triengen (CH)
(72) Erfinder: HUBER, Beat, CH-6233 Büron (CH); WALDISPÜHL, Peter, CH-6234 Triengen (CH)
(74) Vertreter: Patentanwälte Schaad, Balass, Menzl & Partner AG
(86) Internationale Anmeldenummer: PCT/CH1999/000586
(87) Internationale Veröffentlichungsnummer: WO 2000/034022

(56) Entgegenhaltungen:
- EP-A- 0 561 051
- WO-A-97/02770
- DE-A- 3 820 814
- DE-A- 4 036 361
- DE-A- 19 535 134

## Beschreibung

Die Erfindung betrifft eine Zahnbürste gemäss dem Oberbegriff des Anspruches 1 sowie ein Verfahren zur Herstellung der Zahnbürste gemäss dem Oberbegriff des Anspruchs 9.

Zahnbürsten sind Massenartikel und müssen daher kostengünstig hergestellt werden können. Bekannt sind Zahnbürsten aus einem einzigen Kunststoff und Zahnbürsten aus zwei Kunststoffkomponenten, die z.B. im Zweikomponentenspritzverfahren hergestellt werden. Im letzteren Fall umfasst die Zahnbürste zwei Kunststoffteile: Ein erstes Kunststoffteil aus einem ersten Kunststoff, z.B. Polypropylen, erstreckt sich vom Griff der Zahnbürste bis zum Bürstenkopf und weist miteinander verbundene Ausnehmungen auf. Ein zweites Kunststoffteil aus einem zweiten Kunststoff, z.B thermoplastisches Elastomer, füllt die Ausnehmungen des ersten Kunststoffteils aus. Diese beiden Kunststoffe verbinden sich an der Berührungsfläche der beiden Kunststoffteile. Gegenüber einer Zahnbürste aus nur einem Kunststoff ergibt dies eine grössere Gestaltungsmöglichkeit. Da sich jedoch die beiden Kunststoffe während des Spritzgiessvorganges miteinander verbinden müssen, ist man bei der Auswahl der Kunststoffe und damit bei der Gestaltung der Zahnbürste eingeschränkt.

Eine Zahnbürste und ein Verfahren zur Herstellung einer Zahnbürste gattungsbildender Art ist aus der DE-A-195 35 134 bekannt. An einen Hauptkörper aus Kunststoff des Handgriffs einer Zahnbürste ist ein flexibler Kunststoff angespritzt. Um von vornherein eine zuverlässige Verankerung des flexibleren Kunststoffs im Hauptkörper zu gewährleisten, ist der Hauptkörper mit einem zentralen Spritzkanal versehen, der von innen her mit äusseren Anspritzbereichen des flexibleren Kunststoffs an den Hauptkörper kommuniziert.

Es ist ferner in der Spritzgusstechnologie allgemein bekannt, dass kraftschlüssige Verbindungen durch Schwindungsprozesse realisiert werden können, z.B. beim Umspritzen von seg. "Inserts" mit Kunststoff.

Der vorliegenden Erfindung liegt die Aufgabe zugrunde, eine Zahnbürste der eingangs genannten Art bereitzustellen, bei der bei einer kostengünstigen Herstellung eine vielfältige Gestaltung möglich ist.

Diese Aufgabe wird erfindungsgemäss durch eine Zahnbürste mit den Merkmalen des Anspruches 1 gelöst. Das Verfahren zur Herstellung einer solchen Zahnbürste zeichnet sich erfindungsgemäss durch die Merkmale des Anspruches 9 aus Bevorzugte Weitergestaltungen der erfindungsgemässen Zahnbürste bzw. des erfindungsgemässen Verfahrens bilden den Gegenstand der abhängigen Ansprüche.

Dadurch, dass die beiden Teile der Zahnbürste durch mindestens zwei aus verschiedenen, sich während des Spritzgiessvorganges miteinander nicht verbindenden Kunststoffen bestehende Formteile gebildet sind, die insbesondere miteinander in einer kraft- und/oder formschlüssigen Verbindung stehen, bieten sich viele Möglichkeiten für eine zweckmässige Gestaltung des Kunststoffgegenstandes. Es können Kunststoffe mit unterschiedlichem chemischen Charakter verwendet werden. Diese können sich mehr oder weniger stark in ihrer Strukturformel und ihren chemischen Bausteinen unterscheiden. An den Berührungsflächen müssen zwischen den Kunststoffen keinerlei chemische oder physikalische Bindungen z.B. in Form von Brückenbindungen oder van der Waalschen Kräften vorliegen. Allein die Reibungskräfte zwischen den Formteilen in der schwindverbindungsartig aufgebauten Verbindung reichen aus, um die beiden Formteile fest miteinander zu verbinden. Durch die formschlüssige, mittels ineinandergreifenden Teile an den Berührungsflächen der beiden Formteile realisierte Verbindung wird verhindert,: dass sich zwischen den beiden Formteilen während des Schwindvorganges Spalte bilden, in die Wasser und Verunreinigungen eindringen können, oder die gar zu einem Bruch führen könnten.

So können beispielsweise bei einer Zahnbürste am richtigen Ort Kunststoffe mit vorteilhaften Eigenschaften eingesetzt werden. Das eine Formteil kann z.B. aus Polypropylen bestehen (Polypropylen ist günstig, flexibel, chemisch resistent, jedoch nicht voll transparent erhältlich), während für das andere Formteil beispielsweise Styrol-Acryl-Nitril (SAN) gewählt werden kann (ebenfalls günstig, transparent, ästhetisch). Vorzugsweise wird das den Bürstenkopf tragende Formteil aus Polypropylen hergestellt, da Polypropylen gegen die oft aggressiven Stoffe der Zahnputzmittel resistent ist.

Vorzugsweise haben die zwei kunststoffe ein unterschiedliches Schwindverhalten, da so eine feste Schwindverbindung leichter zu erreichen ist. In diesem Fall wird vorzugsweise einem ersten Schritt dasjenige Formteil gespritzt, das aus Kunstoff mit dem geringeren Schwindmass hergestellt wird. In einem zweiten Schritt wird das zweite Formteil aus Kunstoff mit dem grösseren Schwindmass gespritzt, wodurch ein natürlicher Anpressdruck des zweiten Kunststoffes gegenüber dem ersten erzielt wird.

Die Erfindung wird im folgenden anhand der Zeichnung näher erläutert.

Es zeigen:
- Fig. 1: ein erstes Ausführungsbeispiel einer aus zwei Formteilen bestehenden Zahnbürste in Seitenansicht und teilweise im Längsschnitt;
- Fig. 2: die Zahnbürste nach Fig. 1 in Draufsicht;
- Fig. 3: die Zahnbürste nach Fig. 1 in Untersicht;
- Fig. 4: ein erstes Formteil der Zahnbürste nach Fig. 1 in Ansicht und teilweise im Längsschnitt;
- Fig. 5: das Formteil nach Fig. 4 in Draufsicht;
- Fig. 6: ein zweites Formteil der Zahnbürste nach Fig. 1 in Draufsicht;
- Fig. 7: einen Schnitt nach Linie VII-VII in Fig. 6;
- Fig. 8: eine Verbindungsstelle der beiden Formteile nach Fig. 1 im vergrösserten Massstab;
- Fig. 9: im vergrösserten Massstab einen Schnitt nach Linie IX-IX in Fig. 2;
- Fig. 10: ein zweites Ausführungsbeispiel einer aus zwei Formteilen bestehenden Zahnbürste in Seitenansicht;
- Fig. 11: die Zahnbürste nach Fig. 10 in Draufsicht; und
- Fig. 12: die Zahnbürste nach Fig. 10 im vergrösserten Massstab, in Seitenansicht und teilweise im Schnitt, wobei ein Verschlussteil zum Verschliessen eines Handgriff-Hohlraumes vom übrigen Zahnbürstenteil getrennt dargestellt ist.

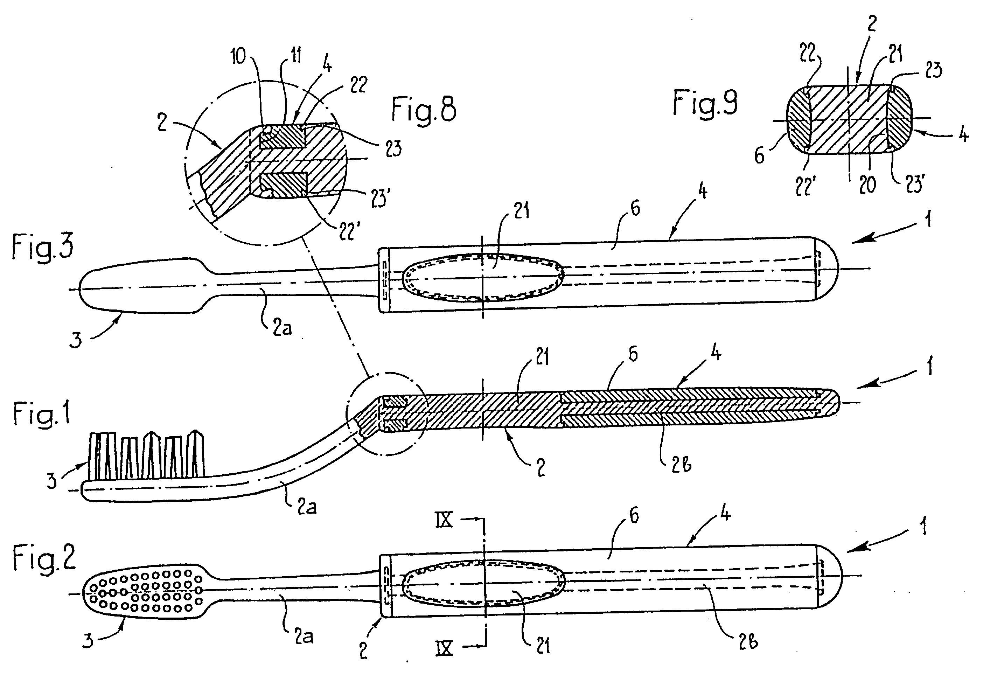

Gemäss Fig. 1 bis 3 weist eine Zahnbürste 1 ein erstes Formteil 2 auf, das in seinem vorderen Bereich 2a einen Bürstenkopf 3 trägt. Das erste, aus einem Kunststoff A bestehende Formteil 2 ist über einen Abschnitt seiner Länge, nämlich in seinem hinteren Handgriffbereich 2b, von einem zweiten, aus einem Kunststoff B bestehenden Formteil 4 umfasst und mit diesem in einer Art Schwindverbindung kraftschlüssig verbunden. Bei den Kunststoffen A und B handelt es sich um derartige Kunststoffe, die sich während des Spritzgiessvorganges an den Berührungsflächen nicht miteinander verbinden.

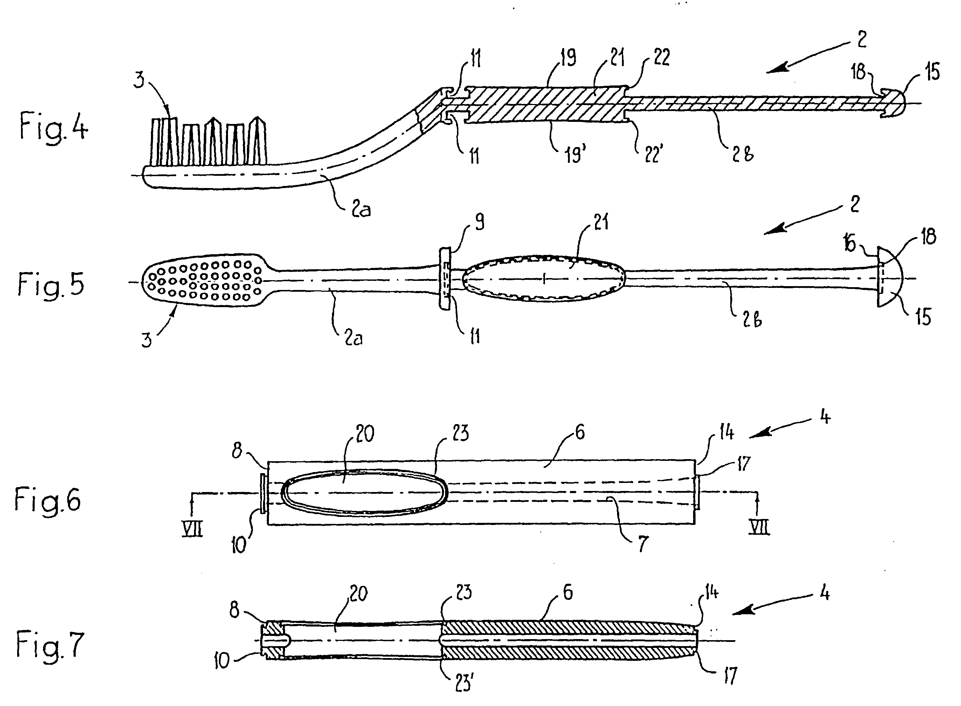

Zwecks besserer Anschaulichkeit sind die beiden Formteile 2, 4 in Fig. 4 bis 7 voneinander getrennt dargestellt. Die beiden Formteile 2, 4 weisen - wie weiter unten beschrieben wird - in ihrem Berührungsbereich gegengleiche, ineinandergreifende Vorsprünge bzw. Ausnehmungen auf, mittels welcher neben der kraftschlüssigen Verbindung beider Formteile 2, 4 zusätzlich eine formschlüssige Verbindung derselben realisiert wird. Diese Verbindung entsteht selbstverständlich erst während des Spritzgussvorganges, bei dem in einem ersten Schritt eines der Formteile und danach in einem zweiten Schritt das andere Formteil um das eine herum oder in dieses hinein gespritzt wird. Mit Vorteil 1 wird beim unterschiedlichen Schwindmass beider Formteile 2, 4 zuerst dasjenige Formteil gespritzt, das aus Kunststoff mit geringerem Schwindmass hergestellt werden soll. Im zweiten Schritt erfolgt Spritzgiessen des anderen Formteils aus Kunststoff: mit grösserem Schwindmass, wodurch ein natürlicher Anpressdruck des zweiten Kunststoffes gegenüber dem ersten Kunststoff entsteht.

Das zweite, in Fig. 6 und 7 einzeln dargestellte und im wesentlichen den Zahnbürsten-Händgriff bildende Formteil 4 ist hülsenförmig ausgestaltet, d.h. mit einer inneren Längsbohrung 7 versehen, die in ihrer Form und Durchmesser dem hinteren Handgriffbereich 2b des ersten, in Fig. 4 und 5 einzeln dargestellten Formteils 2 entspricht. Das hülsenförmige Formteil 4 weist eine Aussenfläche 6 auf.

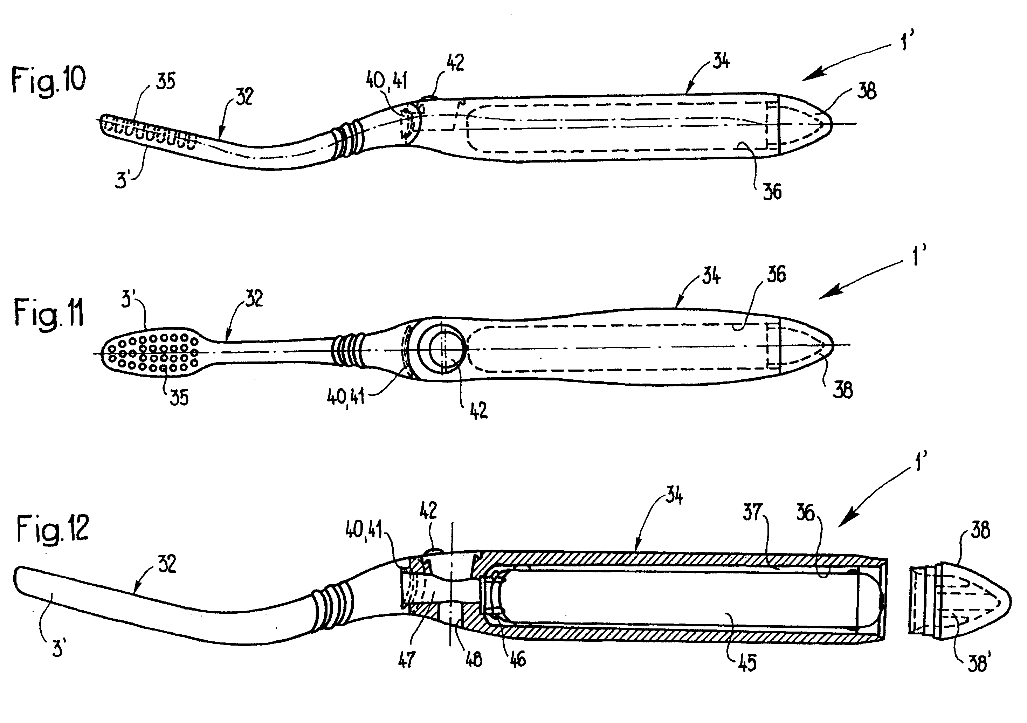

Eine vordere Stirnfläche 8 des hülsenförmigen zweiten Formteils 4 ist in Längsrichtung der Zahnbürste gesehen einer Absatzfläche 9 des ersten Formteils 2 (Fig. 4) zugeordnet. Dabei ragt ein ringförmiger, vorderer Vorsprung 10 des zweiten Formteils 4 in eine gegengleiche Ausnehmungen 11 des ersten Formteils 2 hinein, was insbesondere aus Fig. 8 gut ersichtlich ist. Eine hintere Stirnfläche 14 des hülsenförmigen zweiten Formteils 4 ist einer Absatzfläche 16 eines Endstückes 15 des ersten Formteils 2 zugeordnet. Auch hier ragt ein ringförmiger, hinterer Vorsprung 17 des zweiten Formteils 4 in eine gegengleiche Ausnehmung 18 des Endstückes 15 hinein.

Das zweite Formteil 4 ist mit einer quer zur Längsbohrung 7 angeordneten, im Querschnitt ovalen, länglichen Querbohrung 20 ausgestattet, die für einen gegengleichen, die Querbohrung 20 durchdringenden Teil 21 des ersten Formteils 2 vorgesehen ist. Der ovale Teil 21 weist eine obere und eine untere Randfläche 22, 22' auf. Das zweite Formteil 4 ist mit die Querbohrung 20 umrandenden, den Randflächen 22, 22' gegengleichen Absatzflächen 23, 23' versehen. Die Randflächen 22, 22' und die Absatzflächen 23, 23' bilden wiederum eine Art Vorsprung/Ausnehmung-Formschlussverbindung zwischen den beiden Formteilen 2, 4.

Die Aussenfläche 6 des hülsenförmigen Formteils 4 bildet zusammen mit Aussenflächen 19, 19' (Fig. 4) des ovalen Teiles 21 eine Handgriffläche.

Was Material für die beiden Formteile 2, 4 anbelangt kann als Kunststoff A für das erste Formteil 2 mit Vorteil beispielsweise Polypropylen (PP) gewählt werden, während das zweite Formteil 4 beispielsweise aus folgenden Kunststoffen B bestehen kann:
Styrol-Acryl-Nitril (SAN) und Untergruppen,
Acryl-Butadien-Styrol (ABS) und Untergruppen,
Polyamid (PA) und Untergruppen,
Polycarbonat (PC) und Untergruppen,
Polyester (PBT) und Untergruppen, oder andere
transparente, sich mit Polypropylen (PP) nicht verbindende Kunststoffe.

Die jeweiligen Untergruppen umfassen die zur entsprechenden Familie gehörenden Kunststoffe.

Durch diese Materialkombination ergibt sich ein besonderer Vorteil. Da die heutigen Zahnputzmittel häufig aggressive Substanzen, wie z.B. Pfefferminzöl, enthalten, werden billige Kunststoffe wie z.B. SAN oft angegriffen. Ist das erste, den Bürstenkopf 3 tragende Formteil 2 aus gegen die aggressiven Stoffe resistentem, aber nicht vollständig durchsichtigem PP und das zweite, den Griff beinhaltende Formteil 4 aus durchsichtigem, aber weniger beständigem SAN, so liegt in dieser speziellen Ausgestaltungsform der Erfindung eine kostengünstig herstellbare Zahnbürste vor, die gegen die aggressiven Stoffe der Zahnputzmittel beständig ist und auch ästhetisch zu gefallen vermag. Natürlich kann statt des PP auch jeder andere beständige Kunststoff und statt des SAN beispielsweise einer der oben genannten, billigeren und in der Regel daher weniger beständigeren Kunststoffe verwendet werden.

Bei diesen Materialkombinationen wird in einem ersten Schritt vorzugsweise zuerst das zweite, hülsenförmige Formteil 4 mittels Spritzgiessens hergestellt. Anschliessend wird in einem zweiten Schritt das erste Formteil 2 gespritzt, wobei die bereits beschriebene formschlüssige Verbindung im Berührungsbereich beider Formteile 2, 4 entsteht. Durch das grösser Schwindmass des zuletzt gespritzten Materials A (PP) des ersten Teiles 2 entsteht ein natürlicher Anpressdruck gegenüber dem aus Material B (z.B. SAN) bestehenden zweiten Teil 4, und es wird eine kraft- und formschlüssige Verbindung beider Formteile 2, 4 durch Ineinandergreifen der Vorsprünge 10, 17, 22, 22' in Ausnehmungen 11, 18, 23, 23' bewerkstelligt, ohne dass sich zwischen den sich eigentlich nicht verbindenden Kunststoffen A, B Spalte bilden, in die Wasser und Verunreinigungen eindringen können oder die gar zu einem Bruch führen könnten.

Als Beispiel wurde. eine aus zwei Formteilen 2; 4 bestehende Zahnbürste 1 dargestellt und beschrieben. Eine andere Ausgestaltung der beiden Formteile wäre durchaus möglich. Die hülsenförmige Ausgestaltung eines der Formteile ist nicht zwingend notwendig.

Selbstverständlich könnte eine Zahnbürste auch mehrere Formteile aus sich während des Spritzgiessvorganges miteinander nicht verbindenden Kunststoffen aufweisen, die miteinander in einer kraft- und/oder formschlüssigen Verbindung stehen.

Es könnten aber auch aus zwei oder nehreren Kunststoffkomponenten bestehende Formteile, bei denen z.B. eine (oder mehrere) Komponente des einen Formteiles mit einer (oder mehreren) Komponente des anderen Formteiles nicht verbindbar ist, miteinander kraft- und/oder formschlüssig verbunden werden.

In Fig. 10 und 11 ist ein zweites Ausführungsbeispiel einer Zahnbürste 1' dargestellt, die ebenfalls zwei aus verschiedenen, sich während des Spritzgiessvorganges miteinander nicht verbindenden Kunststoffen A und B bestehende Formteile 32, 34 aufweist. Auch hier bildet das erste Formteil 32 einen den Bürstenkopf 3' tragenden Zahnbürstenteil (in Fig.10 und 11 sind die Borsten des Bürstenkopfes 3' nicht dargestellt; es sind lediglich die zur Verankerung von Borstenbüscheln vorgesehene Vertiefungen 35 ersichtlich). Das zweite Formteil 34 bildet einen Zahnbürsten-Handgriff. Dieser ist über einen Teil seiner Länge mit einer zylindrischen Aussparung 36 versehen, durch welche ein nach hinten offener und mittels eines Verschlussteils 38 verschliessbarer Hohlraum 37 im Zahnbürsten-Handgriff gebildet ist. Das zweite Formteil 34 besteht vorzugsweise aus einer wenigstens teilweise transparenten oder transluzenten Materialkomponente, beispielsweise SAN, so dass im Hohlraum 37 verschiedene ästhetisch wirkende Mittel sichtbar untergebracht werden können (lose Gegenstände, Flüssigkeit, Pulver, bedruckte Rollen etc.). Der Verschlussteil 38 kann unlösbar oder lösbar mit dem zweiten Formteil 34 verbunden werden. Im letzteren Fall können im Hohlraum 37 beispielsweise auch Nutzgegenstände wie Zahnstocher oder Ampulle mit Mundwasser oder Zahnpasta untergebracht werden.

Auch bei dieser Zahnbürsten-Ausführungsform sind die Berührungsflächen beider Formteile 32, 34 mit ineinandergreifenden Teilen 40, 41 versehen, so dass die beiden Kunststoffteile beim Spritzgiessen in eine kraftund formschlüssige Verbindung gebracht werden. Die ineinandergreifenden Teile 40, 41 sind beispielsweise durch einen Vorsprung 40 an der Stirnseite des den Handgriff bildenden Formteils 34 und eine gegengleiche Ausnehmung 41 an der Stirnseite des anderen Formteils 32 gebildet.

Wird der Handgriff aus dem transparenten SAN hergestellt, so wird auch bei dieser Ausführungsform vorzugsweise zuerst dieses handgriffbildende Formteil 34 im Spritzgiessverfahren hergestellt und anschliessend das den Bürstenkopf tragende Formteil 32 beispielsweise aus beständigerem Polypropylen gespritzt.

Sowohl der borstentragende Teil der Zahnbürste als auch der Handgriff können aus weiteren Materialkomponenten bestehende Teile aufweisen. So kann z.B. im Formteil 34 eine Vertiefung für eine Daumenauflage 42 aus einer weiteren Materialkomponente, beispielsweise aus einem thermoplastischen Elastomer (TPE), vorgesehen.

Die in Fig. 12 gezeigte Zahnbürste entspricht der Zahnbürste 1' nach Fig. 10 und 11, ist jedoch gegenüber der Fig. 10 in einem vergrösserten Massstab und teilweise im Schnitt dargestellt (die gleichen Teile sind mit den gleichen Bezugsziffern bezeichnet). Diese Zahnbürste 1' ist zum Einsetzen von verschiedentlich gefüllten Ampullen 45 vorgesehen, für die eine Halterung 46 aus einem elastisch nachgiebigen Kunststoff im vorderen Bereich der Aussparung 36 vorhanden ist. Der Verschlussteil 38 ist im Innern mit einer elastisch nachgiebigen Gegenhalterung 38' versehen. Die Ampulle 45 wird durch die beiden Halterungen 36, 38' sowohl radial, als auch axial in ihrer Lage gehalten. Die Halterung 36 kann beispielsweise aus dem gleichen Kunststoff (vorzugsweise aus PP) und im gleichen Schritt mit dem den Bürstenkopf 3' tragenden Formteil 32 gespritzt werden (der dafür vorhandene Verbindungskanal ist in Fig. 12 mit 47 bezeichnet). Aus dem gleichen Kunststoff und im gleichen Schritt kann auch eine Querbohrung 48 im zuerst gespritzten Formteil 34 (beispielsweise aus SAN) gefüllt werden, wodurch auf der Aussenseite des Handgriffes die Daumenauflage 42 gebildet wird.

Die Ampullen 45 können verschiedene ästhetisch wirkende Gegenstände (lose oder in einer Flüssigkeit schwebend), Flüssigkeit, Pulver etc. beinhalten.

Wie bereits erwähnt könnten ähnlich wie Zahnbürsten auch andere Kunststoffgegenstände für die Verwendung im Bereich der Körperpflege aus wenigstens zwei Formteilen gebildet sein, die aus verschiedenen, sich während des Spritzgiessvorganges miteinander nicht verbindenden Kunststoffen bestehen, und die miteinander in einer kraftund/oder formschlüssigen Verbindung stehen. So könnten beispielsweise bei Behältern oder Verschlusskappen für Behälter, die für Körperpflegepräparate und Substanzen, oder für ärztliche und zahnärztliche Präparate vorgesehen sind, bei einer kostengünstigen Herstellung ebenfalls Kunststoffe mit vorteilhaften Eigenschaften am richtigen Ort eingesetzt werden.

## Patentansprüche

1. Zahnbürste umfassend einen einen Bürstenkopf (3) ausweisenden ersten Formteil (2; 32) aus einem gegen Pfefferminzöl enthaltendes Zahnputzmittel beständigen Kunststoff (A) und einem zumindest einen Teil eines Handgriffs bildenden zweiten Formteil (4; 34), wobei die beiden miteinander fest verbundenen Formteile (2, 4; 32, 34) aus verschiedenen, sich während des Spritzgiessvorganges miteinander nicht verbindenden Kunststoffen (A, B) gebildet sind, **dadurch gekennzeichnet, dass** zum Herstellen der festen Verbindung zwischen den beiden Formteiten (2, 4; 32, 34) das eine Formteil (2; 32) vom andem Formteil (4, 34) zumindest teilweise unter Bildung einer Schwindverbindung umfasst ist und das zweite Formteil (4; 34) aus einem Kunststoff besteht, der gegen Pfefferminzöl enthaltendes Zahnputzmittel weniger beständig ist als der Kunststoff (A) des ersten Formteils (2; 32).

2. Zahnbürste nach Anspruch 1, **dadurch gekennzeichnet, dass** wenigstens an einem Teil der Berührungsfläche beider Formteile (2, 4; 32, 34) eine formschlüssige Verbindung durch ineinandergreifende Teile (10, 11; 16, 17; 22, 23; 22', 23' ; 40, 41) der beiden Formteile (2, 4; 32, 34) gebildet ist.

3. Zahnbürste nach Anspruch 2, **dadurch gekennzeichnet, dass** die formschlüssige Verbindung durch ineinandergreifende Vorsprünge (10, 17, 22, 22', 40) an einem Formteil (4; 34 bzw. 2; 32) und Ausnehmungen (11, 18, 23, 23', 41) am anderen Formteil (2; 32 bzw. 4; 34) gebildet ist.

4. Zahnbürste nach einem der Ansprüche 1 bis 3, **dadurch gekennzeichnet, dass** eines der Formteile (2, 32;. 4 34) ein Teil (42) aus einem thermoplastischen Eastomer aufweist.

5. Zahnbürste nach einem der Ansprüche 1 bis 4, **dadurch gekennzeichnet, dass** das erste Formteil (2; 32) aus Polypropylen besteht

6. Zahnbürste nach einem der Ansprüche 1 bis 5, **dadurch gekennzeichnet, dass** das zweite Formteil (4; 34) aus Styrol-Acryl-Nitril besteht.

7. Zahnbürste nach einem der Ansprüche 1 bis 5, **dadurch gekennzeichnet, dass** das zweite Formteil (2; 32) aus Acryl-Butadien-Styrol, Polyamid , Polycarbonat oder Poyester besteht.

8. Zahnbürste nach einem der Ansprüche 1 bis 7, **dadurch gekennzeichnet, dass** das zweite Formteil (2; 32) aus einem transparenten Kunststoff (B) besteht.

9. Verfahren zur Herstellung einer Zahnbürste nach einem der Ansprüche 1 bis 8 mittels Spritzgiessen, bei dem in einem ersten Schritt aus einem ersten Kunststoff (A oder B) ein Formteil (2; 32 bzw. 4; 34) gespritzt wird und anschliessend in einem zweiten Schritt ein anderes Formteil (4; 34 bzw. 2; 32) aus einem zweiten, sich während des Spritzgiessens mit dem ersten Kunststoff nicht verbindenden Kunststoff (B bzw. A) gespritzt wird, Wobei zum Spritzgiessen des einen Bürstenkopf (3) aufweisenden Formteils (2; 32) ein gegen Pfefferminzöl, enthaltendes Zahnputzmittel resistenter Kunststoff verwendet wird und das bürstenkopflose Formteil (4; 34) zumindest einen Teil (6) eines Zahnbürsten-Handgriffs bildet, **dadurch gekennzeichnet, dass** das eine Formteil (2; 32) vom andern Formteil (4; 34), zumindest teilweise zur Bildung einer Schwindverbindung umfasst wird, und für das Spritzgiessen des zumindest einen Teil (6) des Zahnbürsten-Handgriffs bildenden Formteils (4; 34) ein Kunststoff verwendet wird, der gegen Pfefferminzöl enthaltendes Zahnputzmittel weniger beständig ist als der Kunststoff (A) des den Bürstenkopf (3) aufweisenden Formteils (2; 32).

10. Verfahren nach Anspruch 9, **dadurch gekennzeichnet, dass** bei unterschiedlichem Schwindmass der beiden für die Formteile (2, 4; 32, 34) vorgesehenen Kunststoffe (A, B) im ersten Schritt dasjenige Formteil (4; 34 bzw. 2; 32) gespritzt wird, das aus dem Kunststoff (A bzw. B) mit dem geringeren Schwindmass hergestellt wird.

11. Verfahren nach Anspruch 9 oder 10, **dadurch gekennzeichnet, dass** im ersten Schritt das zumindest einen Teil (6) des Zahnbürsten-Handgriffs bildende Formteil (4;34) aus einem transparenten Kunststoff gespritzt wird, und im zweiten Schritt das den Bürstenkopf (3) aufweisende Formteil (2; 32).

12. Verfahren nach Anspruch 11, **dadurch gekennzeichnet, dass** im ersten: Schritt das zumindest einen Teil (6) des Zahnbürsten-Handgriffes bildende Formteil (4; 34) aus Styrol-Acryl-Nitril gespritzt wird und anschliessend im zweiten Schritt das den Bürstenkopf (3) tragende Formteil (2; 32) aus Polypropylen gespritzt wird.

## Claims

1. Toothbrush comprising a first moulded part (2; 32), having a brush head (3), made of a plastic material (A) resistant to tooth-cleaning agent containing peppermint oil, and a second moulded part (4; 34), forming at least part of a handle, the two firmly interconnected moulded parts (2, 4; 32, 34) consisting of different plastic materials (A, B) which do not bond with one another during the injection-moulding operation, **characterized in that**, for producing the firm connection between the two moulded parts (2, 4; 32, 34), the one moulded part (2; 32) is at least partially enclosed by the other moulded part (4, 34) with the formation of a shrink fit, and the second moulded part (4; 34) consists of a plastic material which is less resistant to tooth-cleaning agent containing peppermint oil than the plastic material (A) of the first moulded part (2; 32).

2. Toothbrush according to Claim 1, **characterized in that** a positive fit is formed at least on part of the surface where the two moulded parts (2, 4; 32, 34) touch by parts (10, 11; 16, 17; 22, 23; 22', 23'; 40, 41) of the two moulded parts (2, 4; 32, 34) engaging in one another.

3. Toothbrush according to Claim 2, **characterized in that** the positive fit is formed by projections (10, 17, 22, 22', 40) on one moulded part (4; 34 and 2; 32, respectively) and recesses (11, 18, 23, 23', 41) on the other moulded part (2; 32 and 4; 34, respectively) engaging in one another.

4. Toothbrush according to one of Claims 1 to 3, **characterized in that** one of the moulded parts (2, 32; 4, 34) has a part (42) made of a thermoplastic elastomer.

5. Toothbrush according to one of Claims 1 to 4, **characterized in that** the first moulded part (2; 32) consists of polypropylene.

6. Toothbrush according to one of Claims 1 to 5, **characterized in that** the second moulded part (4; 34) consists of styrene acrylonitrile.

7. Toothbrush according to one of Claims 1 to 5, **characterized in that** the second moulded part (2; 32) consists of acrylo-butadiene styrene, polyamide, polycarbonate or polyester.

8. Toothbrush according to one of Claims 1 to 7, **characterized in that** the second moulded part (2; 32) consists of a transparent plastic (B).

9. Method of producing a toothbrush according to one of Claims 1 to 8 by means of injection moulding, in which a moulded part (2; 32 or 4; 34) is injection-moulded from a first plastic material (A or B) in a first step and another moulded part (4; 34 or 2; 32) is subsequently injection-moulded from a second plastic material (B or A), which does not bond with the first plastic material during the injection-moulding operation, in a second step, a plastic material which is resistant to tooth-cleaning agent containing peppermint oil being used for the injection-moulding of the moulded part (2; 32) having a brush head (3) and the moulded part (4; 34) without the brush head forming at least part (6) of a toothbrush handle, **characterized in that** the one moulded part (2; 32) is at least partially enclosed by the other moulded part (4; 34) with the formation of a shrink fit, and a plastic material which is less resistant to tooth-cleaning agent containing peppermint oil than the plastic material (A) of the moulded part (2; 32) having the brush head (3) being used for the injection-moulding of the moulded part (4; 34) forming at least part (6) of the toothbrush handle.

10. Method according to Claim 9, **characterized in that**, with a different degree of shrinkage of the two plastic materials (A, B) intended for the moulded parts (2, 4; 32, 34), that moulded part (4; 34 or 2; 32) which is produced from the plastic material (A or B) with the lower degree of shrinkage is injection-moulded in the first step.

11. Method according to Claim 9 or 10, **characterized in that** the moulded part (4; 34) forming at least part (6) of the toothbrush handle is injection-moulded from a transparent plastic material in the first step, and the moulded part (2; 32) having the brush head (3) is injection-moulded in the second step.

12. Method according to Claim 11, **characterized in that** the moulded part (4; 34) forming at least part (6) of the toothbrush handle is injection-moulded from styrene acrylonitrile in the first step and the moulded part (2; 32) bearing the brush head (3) is subsequently injection-moulded from polypropylene in the second step.

## Revendications

1. Brosse à dents comprenant une première pièce moulée (2 ; 32), pourvue d'une tête de brosse (3) et composée d'une matière plastique (A) résistant au dentifrice contenant de l'essence de menthe, et une seconde pièce moulée (4 ; 34) formant au moins une partie d'un manche, les deux pièces moulées (2, 4 ; 32, 34) assemblées fixement entre elles étant formées de matières plastiques différentes (A, B), qui ne s'allient pas entre elles pendant l'opération de moulage par injection, **caractérisée en ce que**, pour la création de l'assemblage fixe entre les deux pièces moulées (2, 4 ; 32, 34), l'une des pièces moulées (2 ; 32) est entourée par l'autre pièce moulée (4 ; 34) au moins en partie en formant un assemblage par contraction, et la seconde pièce moulée (4 ; 34) se compose d'une matière plastique, moins résistante au dentifrice contenant de l'essence de menthe que la matière plastique (A) de la première pièce moulée (2 ; 32).

2. Brosse à dents suivant la revendication 1, **caractérisée en ce qu'**un assemblage par coopération de forme est formé par des parties s'engageant les unes dans les autres (10, 11 ; 16, 17 ; 22, 23 ; 22', 23' ; 40, 41) des deux pièces moulées (2, 4 ; 32, 34), au moins sur une partie de la surface de contact des deux pièces moulées (2, 4 ; 32, 34).

3. Brosse à dents suivant la revendication 2, **caractérisée en ce que** l'assemblage par coopération de forme est formé par des saillies (10, 17, 22, 22', 40) sur une pièce moulée (4 ; 34 et/ou 2 ; 32) et par des creux (11, 18, 23, 23', 41) sur l'autre pièce moulée (2 ; 32 et/ou 4 ; 34) s'engageant les uns dans les autres.

4. Brosse à dents suivant l'une des revendications 1 à 3, **caractérisée en ce que** l'une des pièces moulées (2, 32 ; 4, 34) présente une partie (42) en élastomère thermoplastique.

5. Brosse à dents suivant l'une des revendications 1 à 4, **caractérisée en ce que** la première pièce moulée (2 ; 32) se compose de polypropylène.

6. Brosse à dents suivant l'une des revendications 1 à 5, **caractérisée en ce que** la seconde pièce moulée (4 ; 34) se compose de styrène-acrylo-nitrile.

7. Brosse à dents suivant l'une des revendications 1 à 5, **caractérisée en ce que** la seconde pièce moulée (2 ; 32) se compose d'acrylonitrile-butadiène-styrène, de polyamide, de polycarbonate ou de polyester.

8. Brosse à dents suivant l'une des revendications 1 à 7, **caractérisée en que ce que** la seconde pièce moulée (2 ; 32) se compose d'une matière plastique transparente (B).

9. Procédé de fabrication d'une brosse à dents suivant l'une des revendications 1 à 8 par moulage par injection, dans lequel une pièce moulée (2 ; 32 et/ou 4 ; 34) est injectée en une première matière plastique (A ou B) dans une première phase, et une autre pièce moulée (4 ; 34 et/ou 2 ;32) est ensuite injectée dans une seconde phase en une seconde matière plastique (B et/ou A) ne s'alliant pas avec la première matière plastique pendant le moulage par injection, une matière plastique résistant au dentifrice contenant de l'essence de menthe étant utilisée pour le moulage par injection de l'une des pièces moulées (2 ; 32), pourvue d'une tête de brosse (3), et la pièce moulée (4 ; 34) dépourvue de tête de brosse formant au moins une partie (6) d'un manche de brosse à dents, **caractérisé en ce qu'**une pièce moulée (2 ; 32) est entourée par l'autre pièce moulée (4 ; 34) au moins en partie pour former un assemblage par contraction, et une matière plastique, utilisée pour le moulage par injection de la pièce moulée (4 ; 34) formant au moins une partie (6) du manche de la brosse à dents, est moins résistante au dentifrice contenant de l'essence de menthe que la matière plastique (A) de la pièce moulée (2 ; 32) pourvue de la tête de brosse (3).

10. Procédé suivant la revendication 9, **caractérisé en ce que**, pour une contraction différente des deux matières plastiques (A, B) prévues pour les pièces moulées (2, 4 ; 32, 34), la pièce moulée (4 ;34 et/ou 2 ; 32) injectée dans la première phase est celle composée de la matière plastique (A et/ou B) de contraction inférieure.

11. Procédé suivant l'une des revendications 9 et 10, **caractérisé en ce que** la pièce moulée (4 ; 34), formant au moins une partie (6) du manche de la brosse à dents, est injectée dans la première phase en une matière plastique transparente, et la pièce moulée (2 ; 32) pourvue de la tête de brosse (3) est injectée dans la seconde phase.

12. Procédé suivant la revendication 11, **caractérisé en ce que** la pièce moulée (4 ; 34) formant au moins une partie (6) du manche de la brosse à dents, est injectée dans la première phase en styrène-acrylo-nitrile, et la pièce moulée (2 ; 32) supportant la tête de brosse (3) est ensuite injectée dans la seconde phase en polypropylène.
